# EUROPEAN PATENT APPLICATION

(11) **EP 1 914 424 A2**
(43) Date of publication of application: **23.04.2008**
(21) Application number: 07018569.9
(22) Date of filing: 21.09.2007
(51) Int. Cl.: F04B 39/00, F04B 39/12, F04B 39/14, F04B 53/00, F04B 53/22

(54) **Installation of middle bearing for a crankshaft**

(30) Priority: 16.10.2006 US 549727
(71) Applicant: Haldex Brake Corporation, Kansas City, MO 64153 (US)
(72) Inventor: Schaake, Mark Dwane, Bonner Springs Kansas 66012 (US); Wolff, Brian Patrick, Raytown Missouri 64138 (US)
(74) Representative: Rehberg Hüppe + Partner

(57) **Abstract**

An apparatus and method for installing an intermediate bearing by press fitting the intermediate bearing between a center hub of a crankshaft and a center web of a crankcase and an apparatus that provides support for an intermediate bearing that is installed within the crankcase and coupled to the center web.

## Description

### FIELD OF THE INVENTION

This invention relates to engine middle bearings, more particularly to apparatuses and methods for installing a middle bearing.

### BACKGROUND OF THE INVENTION

Twin cylinder air compressors used in heavy duty air brake systems typically do not require the use of an intermediate bearing/bushing. However such a bearing/bushing may be used to ensure the mechanical stresses of an air compressor remains at or below acceptable limits. As a result an intermediate bearing/bushing can be advantageous to control package size and performance. When utilized, it is typical to install an intermediate bearing/bushing using split bushings and/or housings.

Further, these bearings/bushings and/or housings typically incorporate special configurations that require these elements to be precisely aligned and received by a crankcase. Such methods may be beneficial for the purpose of securing the intermediate bearing/bushing, and correspondingly the crankshaft, to the crankcase, however such methods lack flexibility and adaptability.

What is needed is a simplified method for installing an intermediate bearing/bushing into a crankshaft. It would also be beneficial if such a method incorporated a tool that enabled a bearing/bushing to be installed in a simplified manner. Further, it would be beneficial if such a method limited the number of elements necessary to install an intermediate bearing/bushing. Still further, it would also be beneficial if such a method enabled the bearing/bushing to be installed within the crankcase.

### SUMMARY OF THE INVENTION

These objectives are achieved by an apparatus and method for installing an intermediate bearing by press fitting the intermediate bearing between a center hub of a crankshaft and a center web of a crankcase or providing for a bearing support that is installed within the crankcase and coupled to the center web.

It is an aspect of the invention to provide a tool for installing a middle bearing on a crankshaft that comprises a first end and a second end with the first end engaging a middle bearing disposed about a center hub of a crank shaft. The tool secures the middle bearing over the center hub as the middle bearing is installed between the center hub and a center web of a crankcase. The second end is able to engage a portion of the crank shaft in order to support the first end in maintaining the location of the middle bearing.

It is yet another aspect for the tool to comprise a cavity between the first and second ends and for a portion of the crankshaft to be disposed within the cavity.

It is a further aspect for the tool to comprise a transition region between the first and second ends that enables the second end to support the first end and consequently the middle bearing.

It is also an aspect for the first end to comprise a first axial center, the second end to comprise a second axial center that is displaced relative to the first axial center, and for the transition region to comprise an axial center that is displaced relative to the first or second axial centers.

It is a further aspect for the tool to comprise two halves that are shells that are brought together to encompass the crankshaft within the cavity.

It is yet another aspect to provide for a method to install a middle bearing that includes the steps of sliding a middle bearing with a proximal end and a distal end over a center hub of a crankshaft; applying an element against the proximal end of the middle bearing to prevent the middle bearing from sliding in a proximal direction; sliding the crankshaft disposed within a crankcase in a distal direction; and pressing the middle bearing such that the middle bearing is disposed between the center hub and a center web of the crankcase. The element can be a tool as described above or a lip formed on the proximal end of the center hub that comprises a outer circumference that is greater than the outer circumference of a bearing surface of the center hub.

It is still a further aspect of the invention to provide for a crankshaft with a center hub comprising a middle bearing surface and a lip. The middle bearing surface comprises an outer diameter that corresponds to the inner diameter of a middle bearing. The lip comprises an outer diameter greater than the outer diameter of the middle bearing surface.

It is yet a further aspect of the invention to provide for a center support to a middle bearing for a crankshaft with a base support and an upper support. The base and upper supports are coupled to a center web the base support comprises a sloped face that corresponds to and comes in contact with a sloped face of the center web.

It is still a further aspect of the invention for a bolt to couple the center support to the crankcase by inserting the bolt into an aperture in the crankcase that is disposed on the exterior of the crankcase and through the crankcase into an aperture in the base support.

Other aspects of the invention and its particular features and advantages will become more apparent from consideration of the following drawings and accompanying detailed description.

### BRIEF DESCRIPTION OF THE DRAWINGS

FIG. 1 is a side cross-sectional view of a compressor with the tool of the present invention disposed about a crankshaft in shadow.

FIG. 2 is a side cross-sectional view of an engine with the tool of the-present invention disposed about a crankshaft for installation and removal in shadow.

FIG. 3 is an exploded perspective view of the tool of the present invention with an intermediate bearing/bushing.

FIG. 4 is a side cross-sectional view of an engine with a crankshaft that comprises a lip on the center hub.

FIG. 5 is a side cross-sectional view of an engine with a center support for an intermediate bearing.

### DETAILED DESCRIPTION OF THE INVENTION

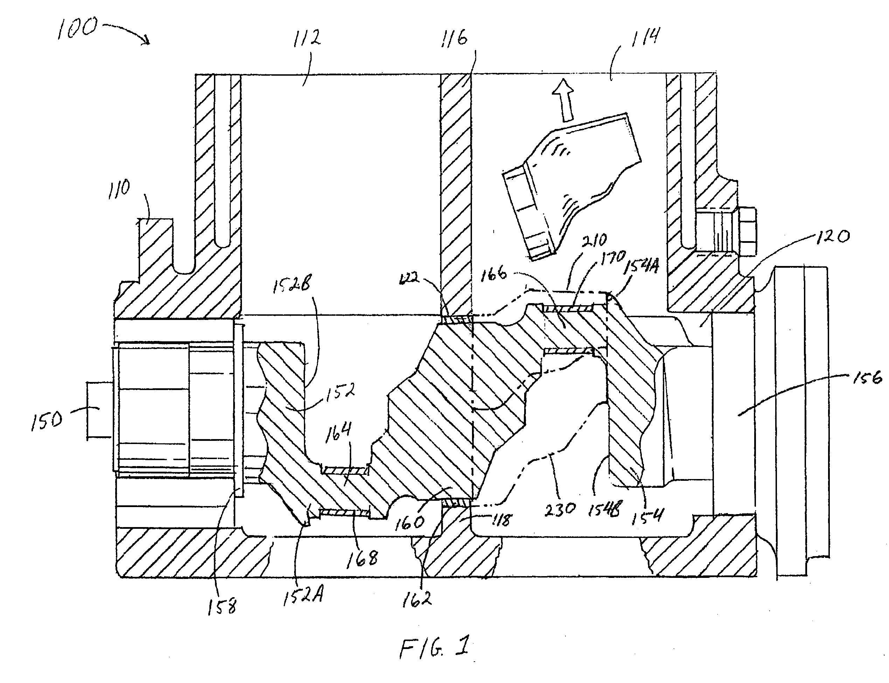

Figs. 1, 2, 4 and 5 depict a multicylinder engine 100 comprising a crankcase 110 and a crankshaft 150. Crankcase 110 comprises a shaft aperture 120 through which the crankshaft 150 is inserted and received by the crankcase 110. The crankcase 110 further comprises a pair of adjacent cylinder barrels 112, 114 disposed on a common side along the common axis of crankcase 110 and shaft aperture 120. Cylinder barrels 112, 116 are separated by a center web 116, 118 and communicate with shaft aperture 120. The inner surface area of center web 116, 118 form a web aperture 122 within shaft aperture 120. Crankshaft 150 installed within crankcase 110 comprises a center hub 160 disposed within the region of web aperture 122. Disposed between center hub 160 and the inner surface area of center web 116, 118 is a middle bearing/bushing 162. Fig. 1 shows that the middle bearing/bushing 162 comprises an inner diameter that is approximately equal to the outer diameter of center hub 160. Middle bearing/bushing 162 is able to slide on and off of center hub 160 in both the proximal and distal directions of crankshaft 150. The outer circumference of center bushing 162 is approximately equal to or slightly greater than the diameter or circumference of the inner surface area of center web 116, 118. The relative dimensions of middle bearing/bushing 162 to center web 116, 118 should be such that insertion of middle bearing/bushing 162 into this region fixedly secures the middle bearing/bushing 162 within center web 116, 118. As such, it is beneficial if bearing/bushing 162 exerts an outward force against center web 116, 118. This assures that bearing/bushing 162 does not become dislodged from its mounted position. Other elements of crankshaft 150 disposed within crankcase 110 are thrust washer 158, distal and proximal counter weights 152, 154, distal and proximal crank journals 164, 166, journal bearings/bushings 168, 170, and ball bearing 156.

The installation of crankshaft 150 with middle bearing/bushing 162 will now be discussed by way of Figs. 1-3. Prior to insertion of crankshaft 150 onto shaft aperture 120, the middle bearing/bushing 162 is slid over center hub 160, thrust washer 158 is disposed on the distal end of crankshaft 150 and ball bearing 156 is pressed on to the proximal end of crankshaft 150. The distal end of crankshaft 150 is inserted into the proximal end of shaft aperture 120. The crankshaft 150 is slid through shaft aperture 120, shown in Fig. 2 as direction arrow 172, until middle bearing/bushing 162 makes contact with the center web 116, 118.

The outer circumference of middle bearing/bushing 162 is sized such that is greater than the circumference of the inner surface of center web 116, 118. As a result, if force were to continue to be applied to crankshaft 150 so as to further insert shaft 150 into shaft aperture 120, center web 116, 118 would cause the middle bearing/bushing 162 to slide off of center hub 160. Thus, middle bearing/bushing 162 would not be disposed between center hub 160 and center web 116, 118.

In order to secure middle bearing/bushing 162 between center hub 160 and center web 116, 188, bearing/bushing 162 must be press fitted between the two elements. Tool 200 is used to install bearing/bushing 162 between the two elements. Tool 200 comprises first 210 and second 230 halves that are multi-profiled shells and that provide a rigid structure that resists the sliding of middle bearing/bushing 162. Each shell comprises a bearing/bushing end 212, 232, a crank shaft end 214, 234, and a transition region 216, 236. The fist 210 and second 230 halves of tool 200 are inserted into crankcase 110 through cylinder 114. The first half 210 is aligned between bearing/bushing 162 and proximal counter weight 154 along an upper portion of the crankshaft 150 from center hub 160, through crank journal 166, and to counter weight 154. The second half 230 is aligned between bearing/bushing 162 and proximal counter weight 154 along a lower portion of the same region. The two halves 210, 230 are subsequently brought together and form tool 200. Tool 200 is a multi-profiled shell that corresponds to the contour of the portion of crankshaft 150 from center hub 160, through crank journal 166, and to counter weight 154. In order for crankshaft 150 to be contained within the inner cavity of tool 200, the inner circumferences of tool 200 are greater than the outer circumferences of crankshaft 150 from center hub 160 through crank journal 166.

Bearing/bushing end 212, 232 comprises an axial center that corresponds to the axial center of middle bearing/bushing 162. Further the inner circumference and outer circumference of bearing/bushing end 212, 232 corresponds to the inner and outer diameters of middle bearing/bushing 162. As such, the distal face 218, 238 of end 212, 232 is aligned with and able to come in contact with bearing/bushing 162. It is beneficial if the outer and inner surfaces of end 212, 232 are normal to the contact surface of bearing/bushing 162.

Proximal counter weight 154 comprises an outer lip surface 154A that is coupled to journal 166. At least a portion of the outer diameter or circumference of outer lip surface 154A is greater than the outer diameter or circumference of journal 166. Crankshaft end 214, 234 comprises an axial center that corresponds to the axial center of outer lip surface 154A. The outer and inner surfaces of crankshaft end 214, 234 corresponds to the portion of outer lip surface 154A that lies beyond journal 166. As such, the proximal face 220, 240 of crankshaft end 214, 234 aligns with and is able to come in contact with proximal counter weight 154. It is beneficial if the outer and inner surfaces of crankshaft end 214, 234 are normal to outer lip surface 154A.

Figs. 1-3 also show that the axial centers of bearing/bushing end 212, 232 and crankshaft end 214, 234 are displaced relative to one another, i.e. the axial centers lie in different plains. As a result, transition region 216, 236 is formed between these two ends. Transition region 216, 236 can be a sloped transition from bearing/bushing end 212, 232 to crankshaft end 214, 234 or can have an intermediate axial center between these two ends. Fig. 2 shows that first half 210 has a one step profile and second half 230 has a three step profile. Such a profile is chosen based on the need to distribute the reactive force that results from press fitting middle bearing/bushing 162.

With tool 200 installed between middle/bearing bushing 162 and counter weight 154, the middle/bearing bushing 162 is secured over center hub 160 for forces applied in the installation direction 172. By applying force in direction 172, middle bearing/bushing 162 is prevented from sliding off of center hub 160 when bearing/bushing 162 comes into contact with center web 116, 118. Continuing to apply force in direction 172 presses bearing/bushing 162 between center web 116, 118 and center hub 160. Force is continuously applied to crankshaft 150 until the thrust washer 158 is in simultaneous contact with the crankcase 110 and distal counterweight 152. With middle bearing/bushing 162 properly installed, the first 210 and second 220 halves are subsequently separated and removed through cylinder 114.

Fig. 2 also shows that tool 200 can be utilized to uninstall middle bearing/bushing 162. To do so, first 210 and second 230 halves are inserted through cylinder 112 and aligned between bearing/bushing 162 and distal counter weight 152 along the upper and lower portions of the crankshaft 150 from center hub 160, through crank journal 164, and to counter weight 152. The two halves are brought together and align with bearing/bushing 162 and counter weight 152 in the same manner described above for installation. A force is applied in a direction opposite to direction 172. Tool 200 extends this force to bearing/bushing 162 enabling it to be dislodged from the region between web 116, 118 and center hub 160.

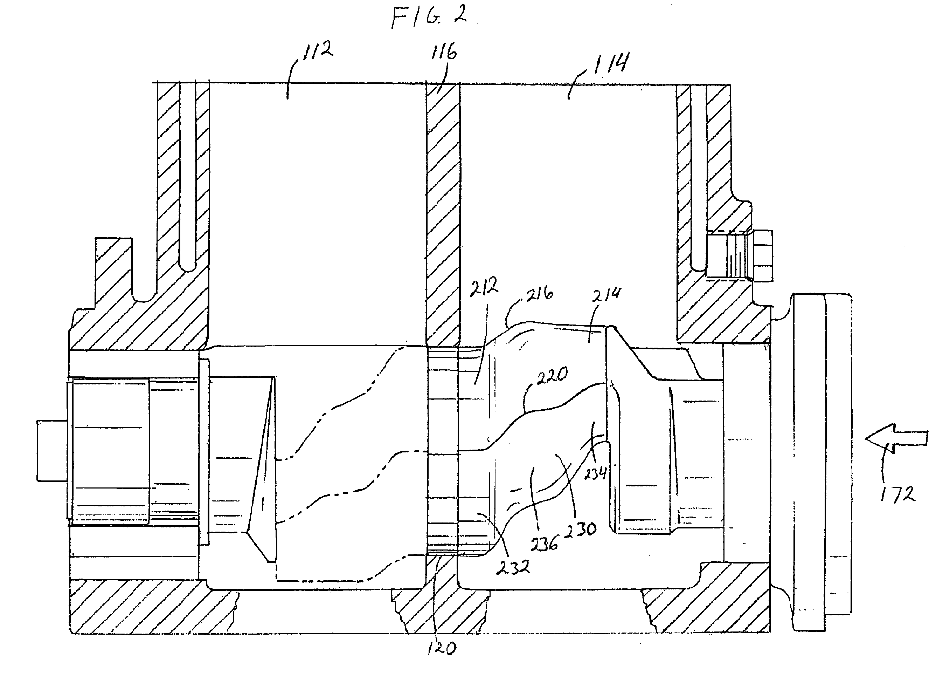

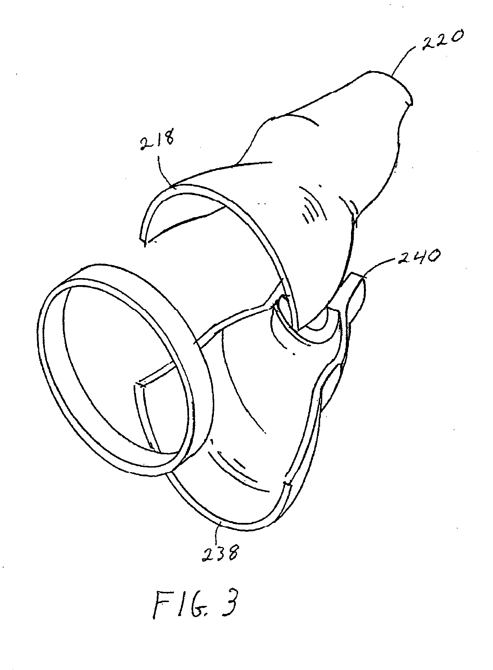

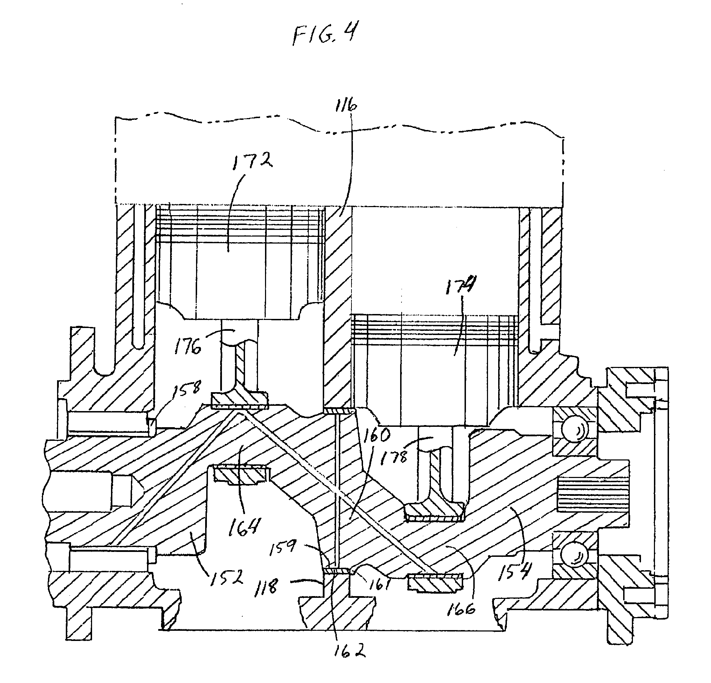

Fig. 4 shows that the middle bearing/bushing 162 may also be installed over center hub 160 by incorporating a lip on center hub 160. As such, center hub 160 comprises bearing/bushing surface 159 and a center hub lip 161. The outer diameter of bearing/bushing surface 159 is approximately equal to the inner diameter of middle bearing/bushing 162 such that middle bearing/bushing 162 is able to slide onto bearing/bushing surface 159 from the distal end of center hub 160. Center hub lip 161 is disposed proximally relative to the bearing/bushing surface 159. The outer diameter of center hub lip 161 is greater than the outer diameter-of bearing/bushing surface 159 and the inner diameter of middle bearing/bushing 162. As a result, upon sliding bearing/bushing 162 over the distal end of hub 160 the bearing/bushing 162 is inhibited from continuing to slide in the proximal direction hub lip 161.

The installation of crankshaft 150 with middle bearing/bushing 162 utilizing a center hub lip 161 will now be discussed by way of Figs. 4. Prior to insertion of crankshaft 150 onto shaft aperture 120, the middle bearing/bushing 162 is slid over bearing/bushing surface 159. The crankshaft 150 is slid through shaft aperture 120, shown in Fig. 2 as direction arrow 172. Force continues to be applied to crankshaft 150 as bearing/bushing 162 makes contact with the center web 116, 118. Center hub lip 161 prevents bearing/bushing 162 from sliding off of center hub 160. This enables bearing/bushing 162 to be pressed between center web 116, 118 and center hub 160. As before, force is continuously applied to crankshaft 150 until the thrust washer 158 is in simultaneous contact with the crankcase 110 and distal counterweight 152.

An intermediate bearing can also be installed utilizing a two-piece center support 190 around the center hub 160B. Crankcase 110 comprises an upper web 117 and a lower web 119. Lower web 119 comprises a multi-profile surface for mounting the center support 190 to the crankcase 110. This profile includes a horizontal face 119A disposed at the proximal end of lower web 119 and a sloped face 119B disposed at the distal end of lower web 119. Two-piece center support 190 comprises a base support 192 and upper support 194, and is coupled to lower web 119. The lower portion of base support 192 comprises a horizontal face 192A that corresponds to and is in flush contact with horizontal face 119A. The lower portion further comprises a support sloped face 192B that corresponds to and is in flush contact with web sloped face 119B. The upper portion of base support 192 encompasses a portion of bearing 162B mounted around center hub 160B. The remaining portion of bearing 162B is encompassed by upper support 194. Base support 192 and upper support 194 are coupled to each by a coupling means such as a bolt (not shown). The center support 190 is coupled to lower web 119 by means of a bolt 196 passing through lower web 119 and into the lower portion of base support 192.

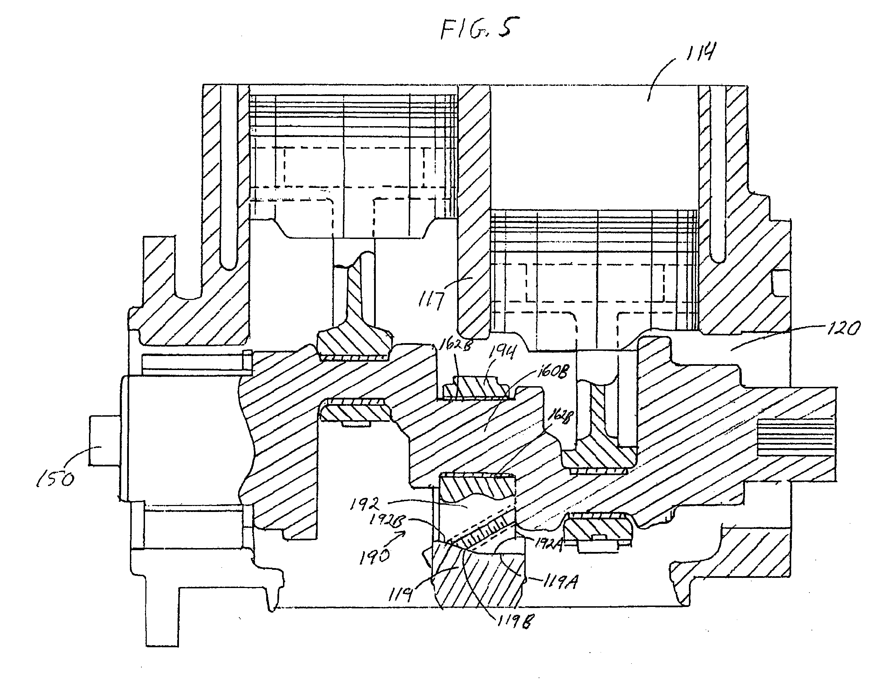

The installation of crankshaft 150 with middle bearing/bushing 162B utilizing center support 190 will now be discussed by way of Fig. 5. A center bearing 162B is disposed about the outer surface of center hub 160B. The distal end of crankshaft 150 is inserted into the proximal end of shaft aperture 120. The crankshaft 150 is slid through shaft aperture 120 in the distal direction 172 until center hub 160B is accessible through cylinder 114. Base support 192 and upper support 194 are inserted into shaft aperture 120 through cylinder 114. Base support 192 and upper support 194 are aligned about the upper and lower portions of center hub 160B and are coupled together by means of a bolt. Crankshaft 150 is slid further into crankcase 110 until support sloped face 192B comes into flush contact with web sloped face 119B and apertures disposed in both sloped faces are aligned. Finally, bolt 119 passes through the apertures in lower web 119 and base support 192 coupling center support 190 to crankcase 110.

Although the invention has been described with reference to a particular arrangement of parts, features and the like, these are not intended to exhaust all possible arrangements or features, and indeed many other modifications and variations will be ascertainable to those of skill in the art.

## Claims

1. A tool for installing a middle bearing on a crankshaft, comprising:
a first end; and
a second end;
wherein the first end engages a middle bearing disposed about a center hub of a crank shaft;
wherein the tool secures the middle bearing over the center hub as the middle bearing is installed between the center hub and a center web of a crankcase.

2. The tool of claim 1, wherein the second end engages a portion of the crank shaft.

3. The tool of claim 1, further comprising a cavity that transitions from the first end to the second end.

4. The tool of claim 3, wherein the tool encompasses a portion of the crankshaft when the portion is disposed within the cavity.

5. The tool of claim 1, further comprising a transition region disposed between the first and second ends.

6. The tool of claim 3, wherein the transition region is a sloped transition from the first end to the second end.

7. The tool of claim 3, wherein the transition region is a stepped transition from the first end to the second end.

8. The tool of claim 1, further comprising a contour that corresponds to the shape of the crank shaft in a region of a crank journal.

9. The tool of claim 1, wherein the first end comprises a distal face that aligns with the middle bearing and comes into contact with the middle bearing.

10. The tool of claim 9, wherein the first end comprises an outer circumference that is greater than the outer circumference of the center hub.

11. The tool of claim 9, wherein the second end comprises a proximal face that aligns with a portion of the crank shaft and comes into contact with the portion of the crank shaft.

12. The tool of claim 1, wherein the first end comprises a first axial center.

13. The tool of claim 12, wherein the first axial center corresponds to the axial center of the middle bearing.

14. The tool of claim 12, wherein the second end comprises a second axial center.

15. The tool of claim 14, wherein the second axial center is displaced relative to the axial center of the first end.

16. The tool of claim 14, further comprising a transition region between the first end and the second end comprising a transition axial center that is displaced relative to the first axial center or the second axial center.

17. The tool of claim 1, further comprising a first half and a second half.

18. The tool of claim 17, wherein the first and second halves are shells that comprise cooperating surfaces that form the tool when brought together.

19. The tool of claim 18, wherein a cavity is formed and extends from the first end to the second end when the first and second halves are brought together.

20. The tool of claim 17, wherein the first half comprises a contour that corresponds to an upper portion of the crank shaft and the second half comprises a contour that corresponds to a lower portion of the crank shaft.

21. A method for installing a middle bearing on a crankshaft comprising:
sliding a middle bearing with a proximal end and a distal end over a center hub of a crankshaft;
applying an element against the proximal end of the middle bearing to prevent the middle bearing from sliding in a proximal direction;
sliding the crankshaft disposed within a crankcase in a distal direction; and
pressing the middle bearing such that the middle bearing is disposed between the center hub and a center web of the crankcase.

22. The method of claim 21 further comprising, sliding the crankshaft through a crankshaft aperture of the crankcase until the middle bearing makes contact with the center web.

23. The method of claim 22, wherein the element is a tool insertable into the crankcase.

24. The method of claim 23 further comprising, inserting a tool comprising a first end and a second end through a cylinder of the crankcase.

25. The method of claim 24, wherein the tool further comprises a first half and a second half that are separable and form the tool when brought together.

26. The method of claim 25 further comprising, mounting the tool about the crankshaft such that the first end is in contact with the middle bearing.

27. The method of claim 26, wherein the step of mounting the tool further comprises the step of securing the second end against a portion of the crankshaft.

28. The method of claim 27 further comprising, separating the first and second halves after the step of pressing the middle bearing and removing the first and second halves through the cylinder.

29. The method of claim 21, wherein the element is a lip disposed on the proximal end of the center hub.

30. The method of claim 29, wherein the lip has an outer diameter that is greater than the outer diameter of a middle bearing surface of the center hub upon which the middle bearing is disposed.

31. A crankshaft comprising:
a center hub comprising a middle bearing surface and a lip;
wherein the middle bearing surface comprises an outer diameter that corresponds to the inner diameter of a middle bearing;
wherein the lip comprises an outer diameter greater than the outer diameter of the middle bearing surface.

32. The crankshaft of claim 31, wherein the lip is disposed on the proximal end of the center hub.

33. The crankshaft of claim 31, wherein the outer diameter of the middle bearing corresponds to the inner diameter of a center web of a crankcase.

34. The crankshaft of claim 31, wherein the middle bearing is installed between the center hub and the center web by press fitting the middle bearing between center hub and the center web.

35. The crankshaft of claim 34, wherein the lip inhibits the middle bearing from moving in the proximal direction along the crankshaft.

36. A center support to a middle bearing for a crankshaft comprising:
a base support and an upper support;
wherein the base and upper supports are coupled to a center web;
wherein the base support comprises a sloped face that corresponds to and comes in contact with a sloped face of the center web.

37. The center support of claim 36, wherein the sloped face of the center web incrementally narrows the size of a crankshaft aperature of a crankcase in the distal direction.

38. The center support of claim 36, further comprising a mechanism for coupling the base support to the upper support.

39. The center support of claim 38, further comprising a mechanism for coupling the base support to the center web.

40. The center support of claim 39, wherein the coupling mechanism is a bolt that passes through the center web and into the base support.

41. The center support of claim 40, wherein the bolt is inserted into an aperture in the crankcase that is disposed on the exterior of the crankcase and through the crankcase into an aperture in the base support.

42. The center support of claim 36, wherein the base support is aligned with the center web by sliding the base support in the distal direction until movement of the base support is inhibited by the sloped face of the base support contacting the sloped face of the center web.

43. The center support of claim 36, wherein the center web and base support both comprise a sloped face distally disposed to a horizontal face.

44. The center support of claim 43, wherein the sloped and horizontal faces of the center web come into flush contact with the sloped and horizontal faces of the base support.
